Europäisches Patentamt

European Patent Office

Office européen des brevets

(19)

(11) Numéro de publication : **0 463 913 A1**

## (12) DEMANDE DE BREVET EUROPEEN

(21) Numéro de dépôt : **91401546.6**

(22) Date de dépôt : **11.06.91**

(51) Int. Cl.⁵ : **B23P 19/00,** F16L 55/165, G21C 13/06

(30) Priorité : **29.06.90 FR 9008264**

(43) Date de publication de la demande : **02.01.92 Bulletin 92/01**

(84) Etats contractants désignés : **BE CH DE ES GB LI SE**

(71) Demandeur : **FRAMATOME Tour Fiat 1, Place de la Coupole F-92400 Courbevoie (FR)**

(72) Inventeur : **Bourdonne, Jean-Claude 9 résidence Morambeau F-71660 Le Breuil (FR)**

(74) Mandataire : **Lanceplaine, Jean-Claude et al CABINET LAVOIX 2, Place d'Estienne d'Orves F-75441 Paris Cédex 09 (FR)**

(54) **Dispositif de manutention automatique de plusieurs éléments de positionnement et/ou de liaison.**

(57)    L'invention a pour objet un dispositif de manutention automatique de plusieurs élémentS (1) de positionnement et/ou de liaison entre un magasin et un même nombre d'organes de réception disposés le long d'une ligne, caractérisé en ce qu'il comprend des moyens de déplacement (13, 14, 15), une traverse (12) ayant la forme d'une partie de ladite ligne, des moyens (30) de préhension desdits éléments (1) de positionnement et/ou de liaison et des moyens (22, 23, 24) de centrage adaptés pour coopérer avec au moins un organe de réception disposé le long de ladite ligne.

EP 0 463 913 A1

FIG.2

La présente invention concerne un dispositif de manutention automatique de plusieurs éléments de positionnement et/ou de liaison.

Dans de nombreuses applications, on utilise couramment des éléments de positionnement par exemple pour centrer une pièce par rapport à une autre et/ou des éléments de liaison pour fixer deux pièces entre elles.

Ces éléments de positionnement et/ou de liaison sont constitués, par exemple par des plots de centrage, des vis, des goujons, des boulons ou encore des écrous seuls.

C'est notamment le cas pour des enceintes utilisées dans l'industrie, notamment nucléaire, par exemple les cuves de réacteurs nucléaires ou des générateurs de vapeur, ou encore dans l'industrie chimique, pétrochimique où un organe d'obturation est fixé de manière amovible sur une enceinte afin de pouvoir intervenir périodiquement dans ladite enceinte.

C'est également le cas dans l'industrie automobile, aéronautique où on utilise de nombreux éléments de positionnement et/ou de liaison.

Ces éléments sont généralement employés en assez grand nombre et relativement rapprochés les uns des autres et à chaque intervention, il est nécessaire de les dévisser ou de les visser, de les extraire ou de les positionner et de les stocker.

Ces différentes opérations sont longues et délicates et elles ne peuvent être réalisées qu'en séquences automatisées par commande à distance surtout dans le cas où les appareils sont installés en zone irradiée, contaminée, poluée ou insalubre, ou inaccessible.

Le but de la présente invention est donc de proposer un dispositif de manutention automatique de plusieurs éléments de positionnement et/ou de liaison entre un magasin et un même nombre d'organes de réception, permettant ainsi de réduire les temps d'intervention et de faciliter les procédures d'exploitation.

L'invention a pour objet un dispositif de manutention automatique de plusieurs éléments de positionnement et/ou de liaison entre un magasin et un même nombre d'organes de réception disposés le long d'une ligne, caractérisé en ce qu'il comprend :
– des moyens de déplacement,
– une traverse ayant la forme d'une partie de ladite ligne,
– des moyens de préhension desdits éléments de positionnement et/ou de liaison,
– et des moyens de centrage adaptés pour coopérer avec au moins un organe de réception disposé le long de ladite ligne.

Selon d'autres caractéristiques de l'invention :
– les moyens de déplacement comprennent un palonnier supportant ladite traverse et muni à sa partie supérieure d'un anneau de reprise et d'un crochet destiné à coopérer avec un trolley susceptible de se déplacer sur un chemin de roulement de même forme que ladite ligne,
– les moyens de préhension comprennent plusieurs pinces à fermeture-ouverture automatique, la fermeture et l'ouverture de chaque pince étant réalisées par un système à commande mécanique actionné par le rapport des masses en présence,
– les moyens de centrage sont formés par deux tiges montées coulissantes sur ladite traverse, chaque tige comportant à son extrémité inférieure un embout adapté pour coopérer avec un organe de réception en relief et un embout adapté pour coopérer avec un organe de réception en creux, l'un desdits embouts étant coulissant par rapport à l'autre.

L'invention sera mieux comprise à l'aide de la description qui va suivre, donnée uniquement a titre d'exemple et faite en se référant aux dessins annexes, sur lesquels :
– la Fig. 1 est une vue schématique en plan d'une cuve d'un réacteur nucléaire au-dessus de laquelle est disposé le dispositif de manutention selon l'invention,
– la Fig. 2 est une vue schématique en plan du dispositif de manutention selon l'invention,
– la Fig. 3 est une vue de dessus schématique, partiellement en coupe, du dispositif de manutention selon l'invention,
– les Figs. 4 et 5 sont des vues en plan des moyens de centrage du dispositif selon l'invention,
– la Fig. 6 est une vue schématique en plan d'une pince du dispositif de manutention selon l'invention,
– la Fig. 7 est une vue en perspective éclatée de l'étrier d'une pince du dispositif selon l'invention,
– la Fig. 7a est une vue de détail à plus grande échelle des moyens de friction d'une roue d'indexation.
– les Fig. 8 à 11 sont des vues schématiques montrant le fonctionnement d'une pince du dispositif de manutention selon l'invention.

Dans ce qui suit, l'invention sera décrite pour la manutention de plusieurs éléments de liaison 1 constitués par des goujons et destinés à la fixation d'un couvercle 2 sur une cuve 3 par exemple d'un réacteur nucléaire.

A cet effet, la cuve 3 comporte, en partie haute, un ensemble de taraudages 4 répartis symétriquement sur une circonférence concentrique par rapport à l'axe principal de ladite cuve et destinés a recevoir chacun l'extrémité filetée d'un élément de liaison 1.

D'autre part, le couvercle 2 est pourvu d'une bride periphérique 2a percée d'alésages débouchants 5 correspondant aux taraudages 4 de la cuve 3 et répartis symétriquement sur une circonférence concentrique par rapport à l'axe principal dudit couvercle. Chaque alésage débouchant 5 permet le passage d'un élément de liaison 1.

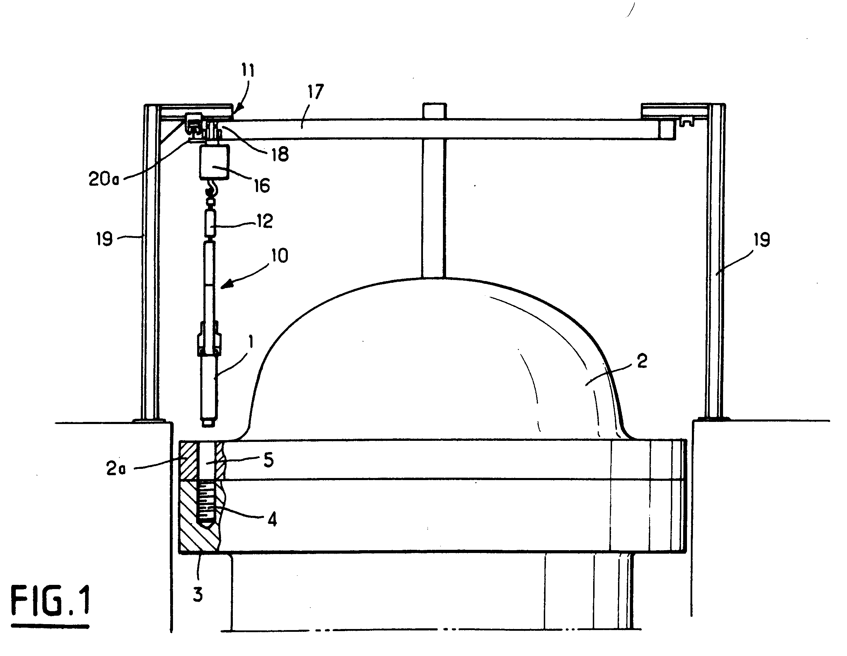

Le dispositif selon l'invention désigné dans son ensemble par la référence 10 (Fig. 1) est destiné à la manutention des éléments de liaison 1 entre un magasin, non représenté, où sont stockés lesdits éléments de liaison et un même nombre d'organes de réception constitués par les alésages débouchants 5.

Le dispositif de manutention représenté aux Figs. 1 à 3, comprend des moyens de déplacement 11 et une traverse 12 supportant, d'une part, des moyens de préhension des éléments de liaison 1 et, d'autre part, des moyens de centrage desdits éléments de liaison par rapport aux alésages débouchants 5.

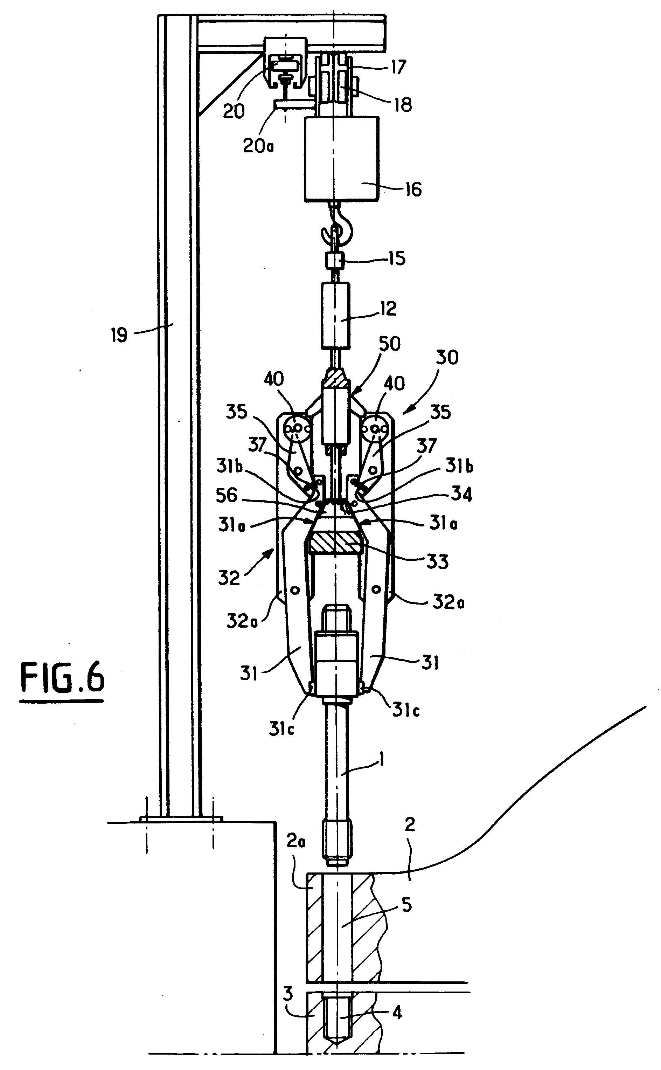

Les moyens de déplacement 11 sont constitues par un palonnier 13 supportant ladite traverse 12 et muni à sa partie superieure d'un anneau de reprise 14 et d'un crochet 15 destiné à coopérer avec un trolley 16 susceptible de se déplacer sur un chemin de roulement 17, grâce à des galets 18 de guidage longitudinal et latéral (Figs 1 et 6).

Le chemin de roulement 17 est supporté par des potences 19 uniformément réparties.

Par ailleurs, le trolley 16 est entrainé sur le chemin de roulement 17 par exemple, par une chaîne sans fin 20 coopérant avec un taquet 20a solidaire dudit trolley.

La traverse 12, fixée en partie supérieure au palonnier 13 de façon rigide, a la forme d'une partie de la pièce recevant les éléments de liaison 1 et peut être courbe comme dans le cas présent ou de forme quelconque.

Si la traverse 12 est courbe, pour des questions de stabilité et notamment la position du centre de gravité, l'arc est limité au maximum à 60°.

Si la traverse 12 est droite, par exemple, il n'y a pas de limitation liée directement à la position du centre de gravité, mais à la difficulté d'équilibrage du système.

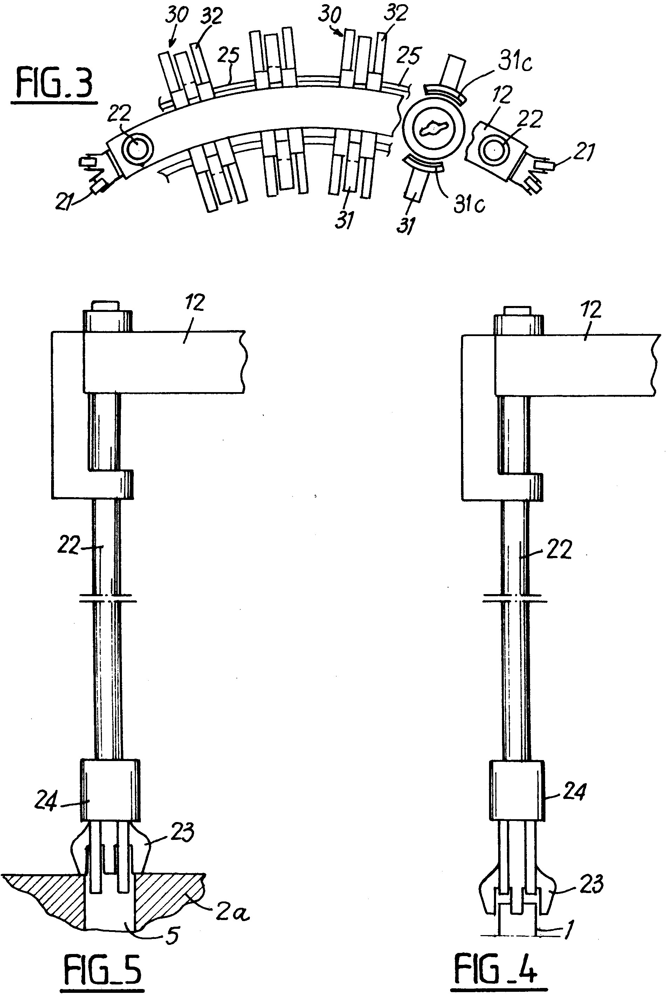

Comme représenté sur la Fig. 3, la traverse 12 est pourvue à chacune de ses extrémites de galets 21 coopérant avec des guides verticaux, non représentés, supporté par le trolley 16 pour effectuer le positionnement de ladite traverse 12 au-dessus des éléments de liaison 1 afin d'effectuer la prise de ceux-ci ou au-dessus des alésages débouchants 5 du couvercle 2 pour la dépose desdits éléments de liaison 1, comme on le verra ultérieurement.

La traverse 12 supporte les moyens de préhension des éléments de liaison 1 qui sont constitués par plusieurs pinces 30, par exemple au nombre de quatre, à fermeture-ouverture automatiques. L'ouverture ou la fermeture de chaque pince est réalisée par un système à commande entièrement mécanique actionné par le rapport des masses en présence.

D'autre part, la traverse 12 comporte des moyens de centrage des éléments de liaison 1 par rapport notamment aux alésages débouchants 5 de la bride 2a du couvercle 2 ou par rapport aux alésages du magasin où sont stockés lesdits éléments de liaison.

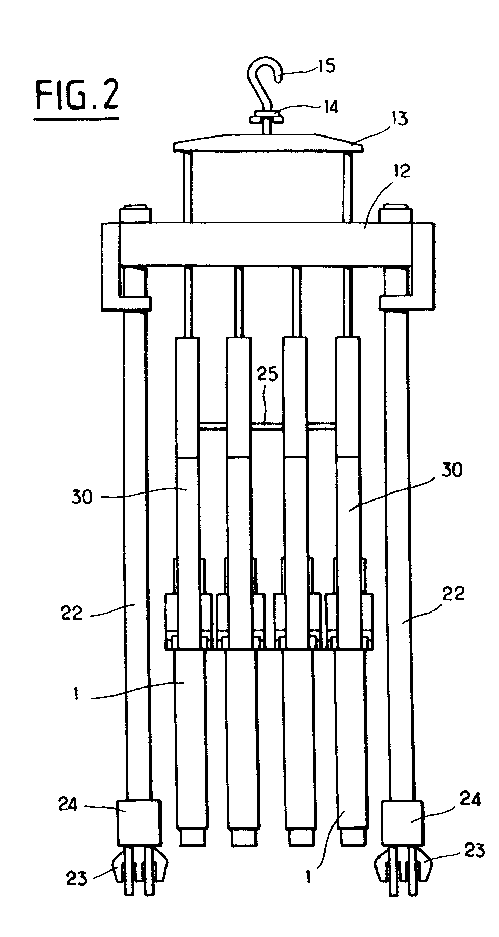

Ces moyens de centrage comprennent deux tiges 22 (Fig. 2) montées coulissantes à chaque extrémité de la traverse 12.

Chaque tige 22 comporte à son extrémitée inférieure un embout 23 adapté pour coopérer avec un organe de réception en relief, comme par exemple la tête d'un élément de liaison 1 (Fig. 4) et un embout 24 adapté pour coopérer avec un organe de réception en creux, comme par exemple un alésage débouchant 5 (Fig. 5).

L'embout 24 est monté coulissant sur la tige 22.

En se reportant maintenant aux Figs. 6 à 8, on va décrire une pince 30, les autres pinces étant identiques.

La pince 30 se compose de deux branches 31 symétriques se prolongeant, à leur partie supérieure, par une portion inclinée formant intérieurement, une contre-rampe 31a de fermeture et à l'extrémité supérieure, extérieurement, une zone de verrouillage 31b.

Les branches 31 sont articulées sur un étrier 32 en forme de double "H" comportant quatre bras 32a parallèles et reliés entre eux par une plaque centrale 33. Chaque branche 31 est disposée entre deux bras 32a de l'étrier 32.

Les deux branches 31 sont réunies, à la partie supérieure, par un ressort de rappel 34 qui les maintient en position ouverte, celles-ci venant en contact alors sur les faces latérales de la plaque centrale 33 de l'étrier 32 éventuellement par l'intermédiaire de cales de réglage, non représentées.

A leur extrémité inférieure, les branches 31 comportent une mâchoire 31c (Fig. 3) en arc de cercle d'environ 60°, profilée pour être en concordance parfaite avec une gorge formée à la périphérie de l'élément de liaison 1.

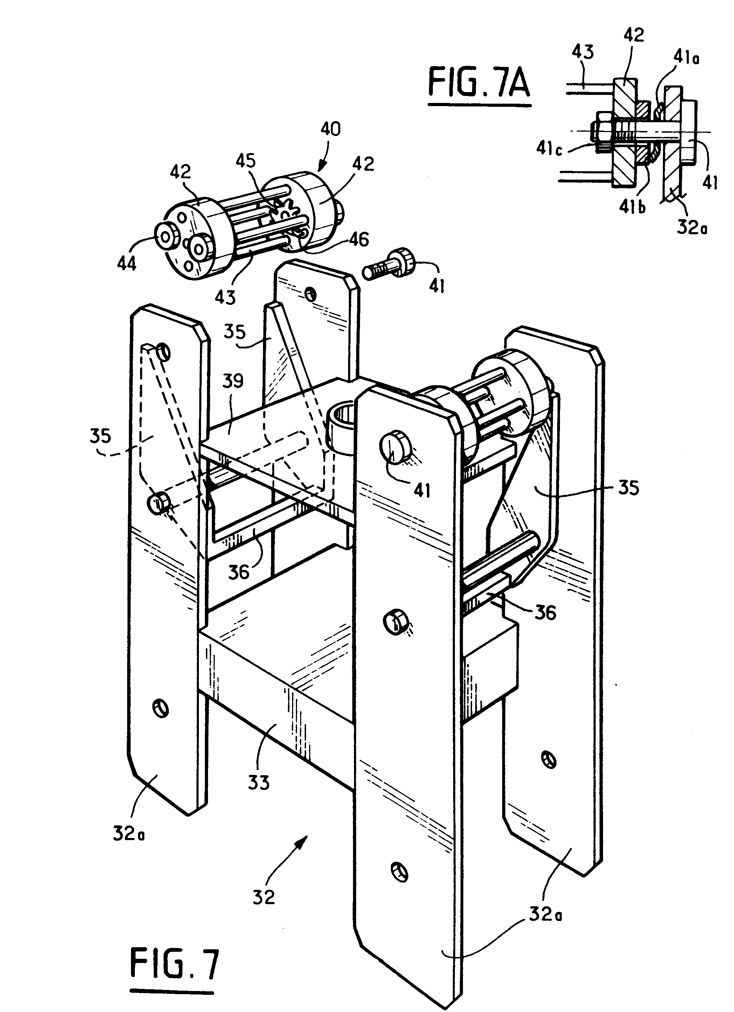

Le système de commande mécanique de la pince 30 comprend deux paires de culbuteurs 35, chaque paire comportant deux culbuteurs reliés entre eux par une tige 36 (Fig. 7) et agissant chacune sur une branche 31.

Chaque paire de culbuteurs 35 est montée articulée entre deux bras 32a de l'étrier 32 et les extrémités inférieures desdits culbuteurs 35 sont maintenues en contact des zones de verrouillage 31b des branches 31 par un ressort de rappel 37.

Selon une variante, les culbuteurs 35 peuvent être maintenus en contact des zones de verrouillage 31b par un contre-poids non representé.

Le système de commande comporte également deux roues d'indexation 40 montées à friction par l'intermédiaire des axes 41 entre deux bras 32a de l'étrier 32 et destinées à coopérer avec les culbuteurs 35 et une boîte de commande de verrouillage 50 solidaire de la traverse 12 et destinée à coopérer, d'une part, avec les branches 31 et, d'autre part, avec les roues d'indexation 40.

Les axes des branches 31 des culbuteurs 35 et des roues d'indexation 40 sont fixes les uns par rapport aux autres.

Comme on peut le voir sur la Fig. 3, les étriers 32 de chaque pince 30 sont reliés rigidement entre eux par des entretoises 25.

Chaque roue d'indexation 40 se compose de deux flasques parallèles 42 réunis par quatre barreaux 43 èquidistants, l'ensemble formant cage d'écureuil.

Deux des barreaux, diamétralement opposés, se prolongent vers l'extérieur et les extrémités desdits barreaux sont munies chacune d'un galet 44 faisant office de came de verrouillage du culbuteur 35 correspondant.

Afin d'éviter que les roues d'indexation 40 tournent librement, un moyen de friction est interposé entre le bras 32a et un flasque 42 correspondant. Ce moyen de friction est constitué par une rondelle élastique 41a qui assure une force de contact appliquée sur une seconde rondelle 41b à coefficient de frottement important (Fig. 7a), l'ensemble étant maintenu sous tension par un écrou 41c vissé sur l'extremité de l'axe 41.

Chaque roue d'indexation 40 comporte un mecanisme anti-dériveur autorisant la rotation de ladite roue que dans un seul sens.

Ce mécanisme anti-dériveur est formé par une roue à rochets 45 solidaire de l'axe 41 et un cliquet 46 solidaire du flasque 42 correspondant et s'encliquetant sur ladite roue à rochets.

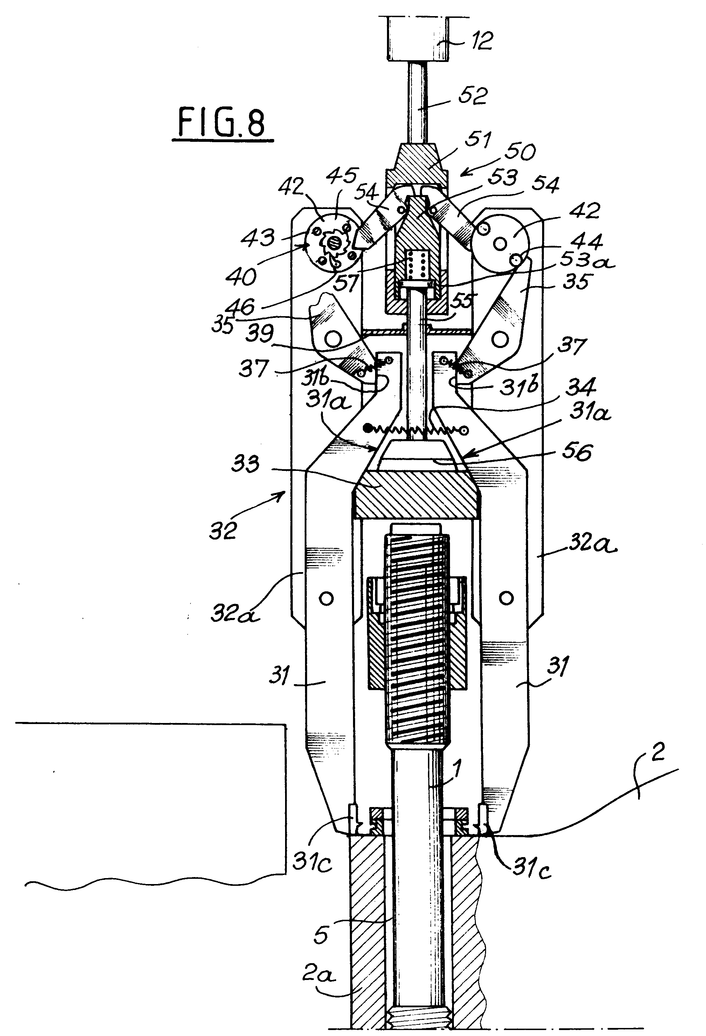

La boîte 50 de commande de verrouillage (Fig. 8) se compose d'un corps 51 recevant, à sa partie supérieure, une tige 52 de liaison avec la traverse 12 et intérieurement un piston 53 portant a sa partie supérieure deux cliquets 54 d'entrainement des roues d'indexation 40.

Le piston 53 est muni, à sa partie inférieure, d'une jupe 53a dans laquelle est montée mobile en translation la tête d'une tige 55 portant à son extrémité inférieure une rampe 56 d'ouverture et de fermeture des branches 31 de la pince 30.

La tige 55 coulisse dans un palier 39 solidaire de l'étrier 32.

Un ressort 57 est interposé entre le piston 53 et la tête de la tige 55 pour le rappel de ladite tige lors de la fermeture ou le verrouillage des branches 31 de la pince 30.

Ce ressort 57 a aussi pour but de pousser le piston 53 à la partie supérieure de la boîte 51 pour maintenir en position ouverte les deux cliquets 54, qui articulent sur ledit piston, ces cliquets comportant un profil de came à leur partie supérieure pour faciliter ce rappel.

En se reportant maintenant aux Figs. 8 à 11, on va décrire les différentes étapes de fonctionnement d'une pince.

La traverse 12 fait office de masse de charge pour forcer l'ouverture des pinces ou actionner le verrouillage et le déverrouillage de celles-ci.

La Fig. 8 représente la positon d'une pince 30 en fin de descente de la traverse 12 pour la prise des éléments de liaison 1 préalablement dévissés de la cuve du réacteur.

La description est faite pour une pince le fonctionnement des autres pinces étant absolument identique.

La pince 30 est normalement ouverte pour effectuer la prise d'un élément de liaison 1, les culbuteurs de verrouillage 35 étant en position bloquée sur les branches 31. Cette position est maintenue par les galets 44 des roues d'indexation 40.

Dans cette phase, la traverse 12 est accrochée au crochet du trolley 16 par l'intermédiaire du palonnier 13 supportant ladite traverse 12.

Le mouvement vertical de la traverse 12 est commandé à distance à partir du pupitre contrôle-commande piloté par l'opérateur.

Au cours de la descente, les tiges de centrage 22 coulissent aux extrémités de la traverse 12 de telle sorte que les embouts 23 coiffent les deux éléments de liaison 1 extérieurs au groupe d'éléments de liaison à enlever, ou s'il n'y a pas d'éléments de liaison d'un côté ou des deux côtés, les embouts 24 s'engagent dans les alésages débouchants 5 du couvercle 2.

La pince 30 arrivant en contact de la face supérieure du couvercle 2 pour la prise de la rondelle ou de l'écrou de l'élément de liaison 1 et le palonnier 13 continuant sa course, la traverse 12 s'affaisse entrainant la rampe 56 par l'intermédiaire de la boîte de commande de verrouillage 50, comme représenté sur la Fig. 8.

Dans cette configuration, la rampe 56 effectue une course vers le bas avant que les cliquets 54 n'attaquent les barreaux 43 des roues d'indexation 40. La poursuite du mouvement vertical descendant de la boîte de commande de verrouillage 50 a pour effet de provoquer la rotation d'un quart de tour des roues d'indexation 40 par les deux cliquets 54 solidaires du piston 53. La rotation d'un quart de tour des roues d'indexation 40 a pour effet de verrouiller les deux culbuteurs 35 (Fig. 8), ce qui autorise le mouvement de fermeture des branches 31 de la pince 30.

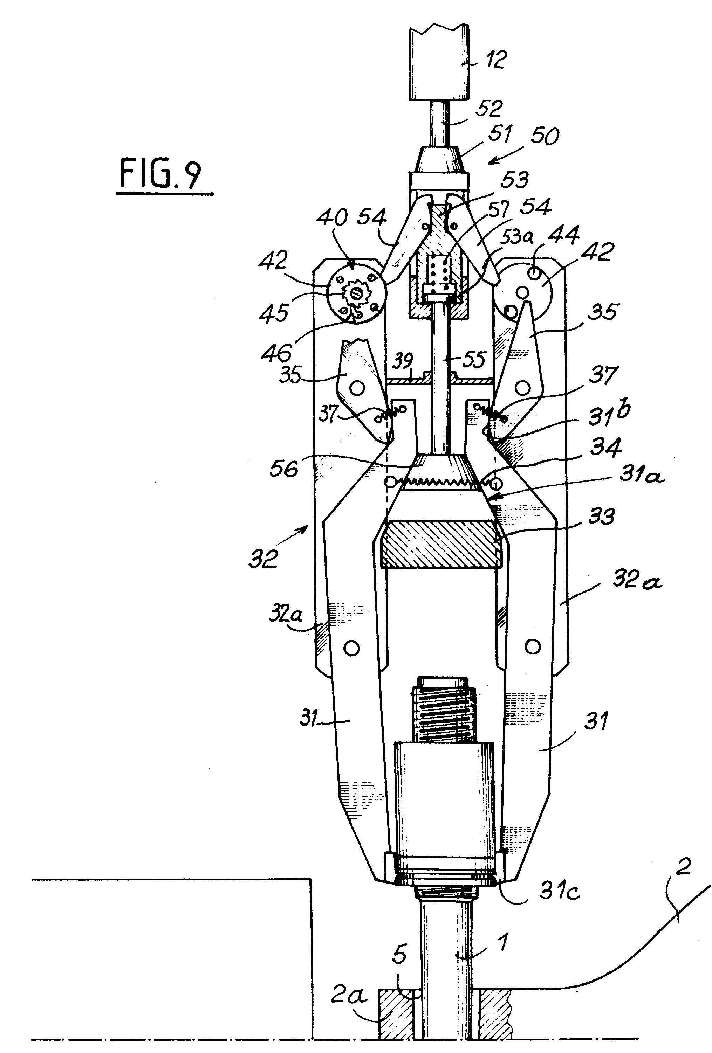

La Fig. 9 représente la fermeture de la pince 30 pour la prise d'un élément de liaison 1.

L'opérateur commande la remontée de la traverse 12 à partir du poste contrôle-commande.

Durant cette phase, le poids de l'étrier 32 maintient les deux branches 31 en contact avec le plan de pose du couvercle 2.

La traverse 12 entraine donc la boîte de commande de verrouillage 50 qui, a son tour, tire sur la tige 55 de la rampe de fermeture 56, le ressort 57 logé dans le piston 53 accompagnant ce mouvement.

La boîte de commande de verrouillage 50, dans son mouvement ascensionnel, enlève les cliquets 54 qui venant en contact des barreaux 43 des roues d'indexation 40 s'escamotent, une translation interne de faible latitude du piston 53 permet le mouvement de ces cliquets 54. Les mécanismes anti-dériveurs 45 et 46 autorisent la rotation des roues d'indexation 40 dans un seul sens.

La rampe de fermeture 56 vient au contact des contre-rampes 31a des branches 31 ce qui provoque la fermeture de la pince 30, le moment induit par la charge de la masse de l'étrier 32 étant supérieur à celui nécessaire à la fermeture de ladite pince, si bien que celle-ci est maintenue en contact avec le couvercle 2.

Les mâchoires 31c des branches 31 viennent au contact de la gorge de la rondelle ou de l'écrou de l'élément de liaison 1 et, dans le même temps, lesdites branches 31 repoussent les culbuteurs de verrouillage 35.

En fin de course de la rampe de fermeture 56, les cliquets 54 de la boîte de commande de verrouillage 50 échappent des roues d'indexation 40 et poussés par le piston 53 de ladite boîte reprennent leur position totalement ouverte.

La montée de la traverse 12 se poursuivant, la pince 30 entraine l'élément de liaison 1.

L'ensemble est alors enlevé du trolley 16 par une fourche a mouvemenet vertical venant en prise avec l'anneau 14 (Fig. 2), cette fourche étant située sur un pont roulant ou un chariot de manutention, ou tout autre dispositif. Ce pont ou ce chariot assure les fonctions de transfert de l'ensemble vers les zones de stockage des éléments de liaison.

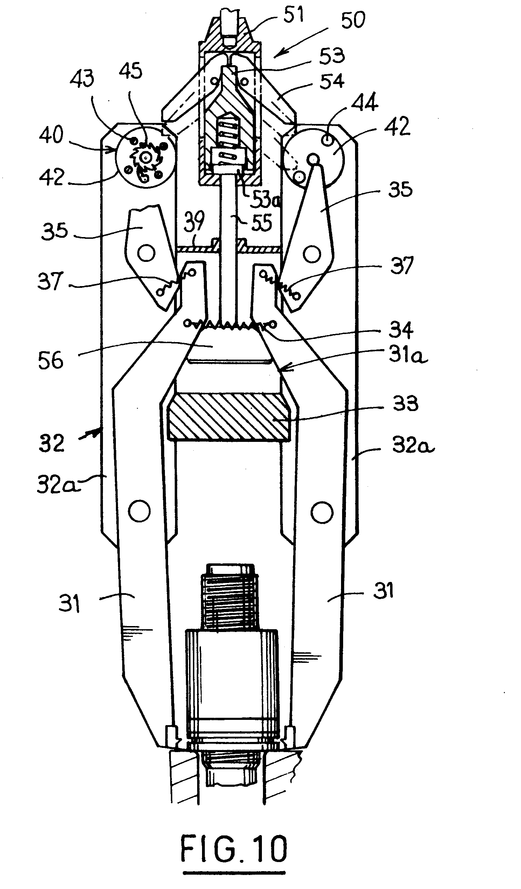

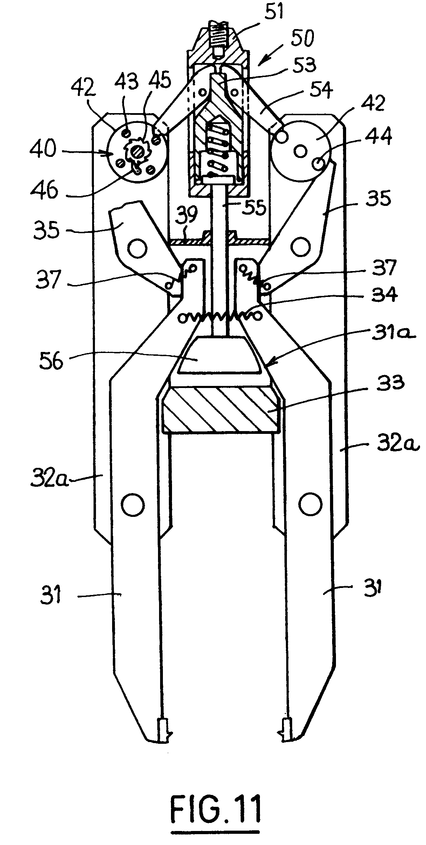

La Fig. 10 représente la dépose des éléments de liaison dans un magasin de stockage et la Fig. 11 la remontée de la pince à vide.

Au moment de la dépose des éléments de liaison dans le magasin, la course verticale est assurée par l'appareil portant l'ensemble par l'intermédiaire du crochet 15.

Les embouts 23 et 24 des tiges de centrage 22 s'appuient, soit sur des têtes de centrage analogues à l'extrémité de l'élément de liaison 1 ou soit dans des trous identiques aux alésages débouchants du couvercle 2.

Les branches 31 arrivant en contact de l'appui du magasin de stockage, l'élément de liaison 1 étant déjà déposé, la traverse 12, poursuivant sa course verticale descendante, entraine la boîte de commande de verrouillage 50 et par conséquent la rampe 56, ce qui a pour effet d'ouvrir les branches 31 de la pince 30 libérant ainsi l'élément de liaison 1.

Cette course est forcée par le ressort de rappel 34.

La première partie de la course de la boîte de commande de verrouillage 50 est celle d'ouverture de la pince 30. Lorsque cette course est effectuée, les cliquets 54 sont presque au contact des barreaux 43 des roues d'indexation 40, comme représenté sur la Fig. 10.

La poursuite de la course verticale de la traverse 12 et de la boite de commande de verrouillage 50 entraine la rotation d'un quart de tour des roues d'indexation 40 par les cliquets 54 ce qui a pour effet de verrouiller les branches 31 en position ouverte par l'intermédiaire des culbuteurs de verrouillage 35, comme représenté sur la Fig. 11.

L'enlévement de la traverse à vide est exécuté avec la fourche du pont roulant ou du chariot de manutention.

La traverse, après l'opération de transfert, est accrochée de nouveau sur le trolley pour effectuer un autre enlèvement d'éléments de liaison.

Les opérations décrites précédemment se déroulent dans l'ordre strictement inverse quand il s'agit de recharger les éléments de liaison sur le couvercle de la cuve du réacteur.

Le fonctionnement du dispositif selon l'invention est donc entièrement mécanique et basé sur le rapport des masses en présence, ne faisant appel à aucun système électrique ou hydraulique pou' des questions de fiabilité et de sécurité.

De plus, une seule traverse suffit pour enlever la totalité des éléments de liaison en plusieurs opérations successives.

Le dispositif suivant l'invention s'applique non seulement aux centrales nucléaires, mais à d'autres secteurs de l'industrie nucléaire, aux installations pétrolières ou pétrochimiques, aux installations minières ou encore pour la fermeture de turbine, vanne hydraulique, conduite sous pression ou corps de vanne.

De façon générale, le dispositif suivant l'invention s'applique dans le cas de nombreuses installations mettant en oeuvre des éléments de positionnement et/ou de liaison, tels que par exemple des pions de centrage, des vis, des boulons, des goujons, ou encore des écrous.

**Revendications**

1. Dispositif de manutention automatique de plusieurs éléments (1) de positionnement et ou de liaison entre un magasin et un même nombre d'organes de réception disposés le long d'une ligne, caractérisé en ce qu'il comprend :
    – des moyens (13, 14, 15) de déplacement,
    – une traverse (12) ayant la forme d'une partie de ladite ligne,
    – des moyens (30) de préhension desdits éléments (1) de positionnement et/ou de liaison,
    – et des moyens (22, 23, 24) de centrage adaptés pour coopérer avec au moins un organe de réception disposé le long de ladite ligne.

2. Dispositif selon la revendication 1, caractérisé en ce que les moyens de déplacement comprennent un palonnier (13) supportant ladite traverse (12) et muni à sa partie supérieure d'un anneau de reprise (14) et d'un crochet (15) destiné à coopérer avec un trolley (16) susceptible de se déplacer sur un chemin de roulement (17) de même forme que ladite ligne.

3. Dispositif selon les revendications 1 et 2, caractérisé en ce qu'il comporte des moyens (21) de guidage vertical de ladite traverse (12), supportés par ledit trolley (16).

4. Dispositif selon la revendication 1, caractérisé en ce que les moyens de préhension comprennent plusieurs pinces (30) à fermeture ouverture automatiques, l'ouverture ou la fermeture de chaque pince (30) étant réalisée par un système (35, 40, 50, 56) à commande mécanique actionné par le rapport des masses en présence.

5. Dispositif selon la revendication 4, caractérisé en ce que chaque pince (30) se compose de deux branches (31) symétriques articulées à la partie inférieure d'un étrier (32) en forme de double "H" dont les bras (32a) sont reliés entre eux par une plaque centrale (33).

6. Dispositif selon la revendication 5, caractérisé en ce que les deux branches (31) de pince sont réunies, à leur partie supérieure, par un ressort de rappel (34) qui les maintient en position ouverte.

7. Dispositif selon la revendication 5, caractérisé en ce que chaque branche (31) de pince se prolonge à sa partie supérieure par une portion inclinée formant, intérieurement, une contre-rampe (31a) de fermeture et, extérieurement, une zone de verrouillage (31b).

8. Dispositif selon la revendication 5, caractérisé en ce que chaque branche (31) de pince comporte a son extrémité inférieure une mâchoire (31c) destinée à saisir un élément (1) de positionnement et/ou de liaison.

9. Dispositif selon la revendication 5, caractérisé en ce que les étriers (32) desdites pinces (30) sont reliés rigidement entre eux par des entretoises (25).

10. Dispositif selon les revendications 4 et 5, caractérisé en ce que le système à commande mécanique de chaque pince (30) comprend au moins deux culbuteurs (35) articulés sur ledit étrier (32) et dont les extrémités inférieures sont maintenues au contact des zones de verrouillage (31b) des branches (31) de pince correspondantes, deux roues d'indexation (40) montées libre en rotation sur ledit étrier (32) et destinées à coopérer avec lesdits culbuteurs (35), et une boîte de commande de verrouillage (50) solidaire de la traverse (12) et destinée à coopérer, d'une part, avec lesdites branches (31) de pince et, d'autre part, avec lesdites roues d'indexation (40).

11. Dispositif selon les revendications 5 et 10, caractérisé en ce que les axes des branches (31) de pince, des culbuteurs (35) et des roues d'indexation (40) de chaque pince (30) sont fixes les uns par rapport aux autres.

12. Dispositif selon la revendication 10, caracatérisé en ce que chaque culbuteur (35) est maintenu en contact de la zone de verrouillage (31b) de ladite branche (31) de pince correspondante par un ressort de rappel (37).

13. Dispositif selon la revendication 10, caractérisé en ce que chaque culbuteur (35) est maintenu en contact de la zone de verrouillage (31b) de ladite branche (31) de pince correspondante par un contre poids.

14. Dispositif selon la revendication 10, caractérisé en ce que chaque roue d'indexation (40) est formée de deux flasques parallèles (42) réunis par des barreaux équidistants (43), deux desdits barreaux (43) diamétralement opposés se prolongeant vers l'extérieur et dont les extrémités sont munies d'un galet (44) faisant office de came de verrouillage du culbuteur (35) correspondant.

15. Dispositif selon la revendication 14, caractérisé en ce que chaque roue d'indexation (40) comporte un mécanisme anti-dériveur (45, 46) autorisant la rotation de ladite roue (40) dans un seul sens.

16. Dispositif selon la revendication 10, caractérisé en ce que la boîte de commande de verrouillage (50) se compose d'un corps (51) recevant, à sa partie supérieure, une tige de liaison (52) avec ladite traverse (12) et intérieuremert un piston (53) portant deux cliquets (54) d'entrainement des roues d'indexation (40).

17. Dispositif selon la revendication 16, caractérisé en ce que le piston (53) est muni, à sa partie inférieure, d'une jupe (53a) dans laquelle est montée mobile en translation la tête d'une tige (55) portant à son extrémité inférieure une rampe (56) d'ouverture et de fermeture des branches (31) de la pince (30) correspondante.

18. Dispositif selon la revendication 17, caractérisé en ce que la tige (55) de la rampe (56) coulisse dans un palier (39) solidaire de l'étrier (32).

19. Dispositif selon la revendication 17, caractérisé en ce qu'un ressort (57) est interposé entre ledit piston (53) et ladite tête de la tige (55) de la rampe (56) pour le rappel de ladite tige (55) lors de là fermeture ou le verrouillage des branches (31) de la pince (30) correspondante.

20. Dispositif selon la revendication 1, caractérisé en ce que les moyens de centrage sont formés par deux tiges (22) montées coulissantes sur ladite traverse (12).

21. Dispositif selon la revendication 20, caractérisé en ce que chaque tige (22) comporte, à son extrémité inférieure, un embout (23) adapté pour coopérer avec un organe de réception en relief et un embout (24) adapté pour coopérer avec un organe de réception en creux, l'un desdits embouts (23, 24) étant coulissant par rapport à l'autre.

FIG.1

# FIG.2

FIG.3

FIG.5

FIG_4

FIG.6

FIG.7A

FIG.7

FIG.8

FIG.9

FIG.10

## FIG.11

**Office européen des brevets**

# RAPPORT DE RECHERCHE EUROPEENNE

Numero de la demande

EP    91 40 1546

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-0 166 587 (BABCOCK-HITACHI) <br> * page 4, ligne 7 - page 5, ligne 9; figures * <br> --- | 1,4 | B23P19/00 <br> F16L55/165 <br> G21C13/06 |
| A | EP-A-0 365 374 (FRAMATOME) <br> * figures * <br> --- | 1 | |
| A | GB-A-570 961 (ENGLISH STEEL CORP.) <br> * figure 3 * <br> --- | 4,5,7,8 | |
| A | US-A-2 911 251 (OSBORN) <br> * figures * <br> --- | 4,5,7,8 | |
| A | EP-A-0 009 973 (PILGRIM) <br> * page 1, ligne 23 - ligne 32 * <br> ----- | 1 | |
| | | | **DOMAINES TECHNIQUES RECHERCHES (Int. Cl.5 )** <br><br> B23P <br> F16L <br> G21C <br> B25B <br> B66C |

Le présent rapport a été établi pour toutes les revendications

| Lieu de la recherche | Date d'achèvement de la recherche | Examinateur |
|---|---|---|
| LA HAYE | 23 SEPTEMBRE 1991 | RIS M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)